Europäisches Patentamt

European Patent Office

Office européen des brevets

(11) Publication number: **0 147 696 B1**

# EUROPEAN PATENT SPECIFICATION

(45) Date of publication of patent specification: **10.07.91**      (51) Int. Cl.⁵: **H01G  13/00, H01G 4/30**

(21) Application number: **84114923.0**

(22) Date of filing: **07.12.84**

(54) Miniaturized monolithic multi-layer capacitor and apparatus and method for making.

(30) Priority: **19.12.83 US 562779**
              **14.06.84 US 620647**

(43) Date of publication of application:
**10.07.85 Bulletin  85/28**

(45) Publication of the grant of the patent:
**10.07.91 Bulletin  91/28**

(84) Designated Contracting States:
**DE FR GB IT NL SE**

(56) References cited:
**EP-A- 0 009 806**
**EP-A- 0 045 058**
**WO-A-82/00542**
**BE-A- 680 489**
**FR-A- 2 440 604**

(73) Proprietor: **SPECTRUM CONTROL, INC. (a
Pennsylvania corporation)
2185 West Eighth Street
Erie, PA 16505(US)**

(72) Inventor: **Shaw, David Glen
John Clendon Road
Glens Falls New York 12801(US)**
Inventor: **Yializis, Angelo
2 Jacobie Road
South Glens Falls New York 12801(US)**
Inventor: **Strycker, Donald Sumner
26 Broad Acres Road
Glens Falls New York 12801(US)**
Inventor: **Ham, Mooyoung
48 Helen Drive
Glens Falls New York 12801(US)**

(74) Representative: **Enskat, Michael Antony Frank
et al
Saunders & Dolleymore 9, Rickmansworth
Road
Watford Hertfordshire WD1 7HE(GB)**

## Description

This invention relates generally to electrical monolithic capacitors and more particularly concerns miniature multi-layered capacitors together with methods and apparatus for making them.

### Cross References

This application is related to the following copending, simultaneously filed, commonly assigned patent applications: Serial No. 562,873, filed December 19, 1983, entitled "Capacitor With Resin Dielectric And Method Of Making"; Serial No. 562,871, filed December 19, 1983, entitled "Capacitors Containing Polyfunctional Acrylate Polymers As Dielectrics"; Serial No. 562,893, filed December 19, 1983, entitled "1; 2-Alkanediol Diacrylate Monomers And Polymers Thereof Useful As Capacitor Dielectrics";Serial No. 562,872, filed December 19, 1983, entitled "Acrylate-Containing Mixed Ester Monomers And Polymers Thereof Useful As Capacitor Dielectrics"; and Serial No. 562,894, filed December 19, 1983, entitled "Polyfunctional Acrylate Monomers For Polymers Thereof Useful As Capacitor Dielectrics", all of which are hereby incorporated by reference.

### Background And Objects Of The Invention

A monolithic capacitor is one in which the layers of electrodes and dielectric are bonded together in a unitary structure as opposed, for example, to a metallized film capacitor in which self-supporting films are rolled or wound into the capacitor form. A miniaturized capacitor is one of very small dimensions, so as to be suitable for microcircuitry. Small overall size could denote low capacitance of little practical value, except that the thickness of the intervening dielectric layer inversely affects the capacitance between adjacent electrodes, and the number of electrode pairs directly affects capacitance. Therefore, as a matter of basic capacitor theory, a capacitor having very thin dielectric layers and many pairs of electrodes could have substantial capacitance despite being of miniature size with the active area of the electrodes being quite small.

Modern microcircuitry not only is well suited for miniature capacitors, but a further requirement of such capacitor applications is an ability to withstand high temperatures. In an electronic circuit, a capacitor could be subject to sustained temperatures of up to 230° C. Even more demanding, circuit production techniques such as wave soldering could subject capacitors to temperatures beyond the melting point of solder, about 280° C., for as long as 10 to 30 seconds.

It is an object of the invention to provide an improved capacitor concept, including the capacitor architecture itself as well as the methods and apparatus for forming that architecture, that produces a very small, miniature capacitor which nevertheless has practical levels of capacitance.

A primary object is also to provide a concept of the foregoing kind that can very economically produce capacitors, both in the sense of using limited amounts of materials as well as permitting high volume, high speed capacitor manufacturing. A related object is to provide such a concept in which the electrical connections or leads can be easily and economically added to individual capacitors, and the capacitor encapsulated without difficulty.

Another object is to provide a concept as characterized above that results in a capacitor capable of withstanding substantial temperatures such as the 280° C encountered during the process of wave soldering. A collateral object is to provide a concept of this kind that could readily be mounted on the bottom or foil side of a circuit board so as to permit compaction of the required physical size of a circuit using such capacitors.

It is also an object to provide a concept of the above character that is not polarity sensitive, i.e., the capacitor is reversible. An accompanying object is to provide such a concept in which the capacitor fails open, in other words, it is self-healing rather than being subject to shorting out in a circuit.

According to the present invention there is provided apparatus for forming capacitors comprising, a housing having first and second vacuum regions, a carrier in said housing and having a surface movable repetitively through said regions, a conductor depositing device in the first vacuum zone for depositing conductive layers on said surface, a dielectric depositing device in the second vacuum region for depositing coatings of dielectric on said conductive layers, and control means for controlling each of said devices so that a conductive layer is deposited, and coated with dielectric, before the surface passes said devices again for receiving successive deposits of said layers and said coatings characterized in that said dielectric depositing means comprises means for flash vapourising a radiation curable dielectric monomer to form a complete monomer coating on successive ones of said conductive layers and by a radiation source located downstream of said dielectric depositing means to cure the monomer coatings produced.

According to the present invention there is further provided a method of producing a capacitor under vacuum on a substrate surface characterized in that said method comprises the steps of (a) forming a layer of electrode material of given thickness on a substrate, (b) flash vapourising a radiation curable dielectric monomer forming a complete dielectric coating of given thickness within preselected limits of thickness on the electrode layer, (c) curing the dielectric coating by irradiation when completed, (d) forming another layer of electrode material of given thickness over the cured dielectric coating, and (e) repeating steps (b), (c) and (d) a selected number of times so as to produce alternate layers and coatings of electrode and cured dielectric materials of predetermined thicknesses on the substrate.

According to the present invention there is yet further provided a capacitor comprising a plurality of conductive layers with each layer being laterally offset in alternating directions relative to the preceding layer so as to define a central capacitance region, wherein a polymer dielectric layer, is on each of the conductive layers so that, in the central capacitance region, the conductive layers are spaced and separated from each other by the polymer layers, characterised in that the polymer layers taper to zero thickness toward lines spaced substantially from two separated portions of the central capacitance region, the conductive layers extend beyond the lines with successive conductive layers electrically contacting one another at spaced-apart terminal portions and the polymer dielectric layers are formed (a) by condensing a vaporized radiation-curable monomer onto such a conductive layer to form a liquid monomer coating on the layer, and (b) by thereafter subjecting the monomer coating to a radiation source to cure the monomer.

Other objects and advantages of the invention will become apparent upon reading the following detailed description and upon reference to the drawings.

Embodiments of the invention will now be described, by way of example only, with reference to the accompanying drawings; in which;

Figure 1 is an enlarged cross section of a capacitor embodying one form of the invention before completion;

Fig 1a is a perspective of a completed capacitor of the Fig 1 type;

Fig. 2 is a schematic of an apparatus embodying one form of the invention;

Fig. 3 is a fragmentary perspective of a portion of the apparatus shown in Fig. 2;

Figs 4a and 4b are cross sections of a portion of the apparatus shown in Fig. 2 illustrating alternate positions and the resulting modes of operation;

Fig. 5 is an enlarged, partially sectioned, diagram of a portion of the apparatus shown in Fig 2;

Fig. 6 is an alternate apparatus to that shown in Fig. 5;

Fig. 7 is a fragmentary diagram of a portion of the apparatus shown in Fig. 2;

Fig. 8 is a bottom elevation of the apparatus shown in Fig. 7;

Fig. 9 is a perspective of the apparatus shown in Fig. 8;

Fig. 10 is a fragmentary perspective of a group of the Fig. 1 capacitors in the form in which they are manufactured;

Fig. 11 is a fragmentary perspective, partially sectioned, of a portion of the apparatus shown in Fig. 2;

Fig. 12 is a section taken approximately along the line 12-12 in Fig. 11; and

Fig. 13 is a perspective similar to Fig. 10 but showing an alternative capacitor group manufactured in a similar manner.

While the invention will be described in connection with preferred embodiments and procedures, it will be understood that we do not intend to limit the invention to those embodiments or procedures. On the contrary, we intend to cover all alternatives, modifications and equivalents as may be included within the spirit and scope of the invention as defined by the appended claims.

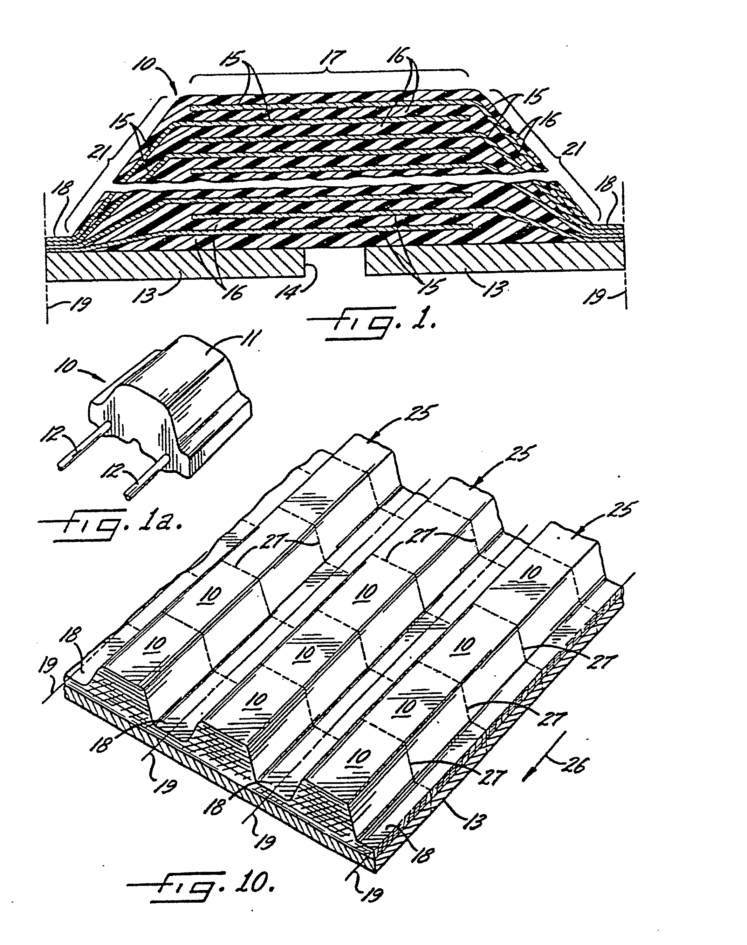

Turning to the drawings, there is shown in Figs. 1 and 1A a capacitor 10 embodying the inventive concept including an encapsulated body 11 with extending connecting wire leads 12. The Fig. 1 cross section, showing a conductive substrate 13 notched at 14 into separate pieces, conductive layers 15, and dielectric coatings 16, illustrate the capacitor 10 before the leads 12 are connected to the respective pieces of the substrate 13 and the capacitor is encapsulated.

Preferably, the substrate 13 is copper sheet about 1.5-2 mils thick. The conductive layers 15 are electrode material such as aluminum about 200-500 Angstroms thick, and the dielectric coatings 16, about 1 micron thick in the center region, are cured, i.e., cross linked, radiation curable resin capable of adhering or bonding to the electrode material and substrate. Useful resins are polyfunctional acrylics, and mixtures thereof, disclosed in the patent applications cross referenced above.

As will be apparent from the dimensions given, even a miniature capacitor of this design which is less than 1 inch square in outer periphery and a few millimeters thick can embody many alternate electrode and dielectric layers, up to 1000 or more. The result is a capacitor effective at up to 50 volts with a capacitance in the 0.001 to 100 microfarad range, depending, of course, upon overall size and the number of electrode pairs.

The dielectric coatings 16 space and separate the conductive layers 15 which are, in effect, divided into two offset sets that extend into a capacitance section or region 17 in which the layers 15 are uniformly interleaved in stacked electrically isolated relation.

Pursuant to the invention, there are terminal portions 18 on the substrate 13 defining electrical joining sections ending at cut-off lines 19 spaced substantially from the opposite, and separated, edges of the central capacitance region 17. The coatings 16 taper from uniform thickness in the uniform capacitor region 17 to zero thickness adjacent the terminal portions 18, so that the capacitor has sloped portions 21. The spacing of the cut-off lines 19 and the terminal portions 18 from the central capacitance region 17 is sufficient so that the uppermost coating 16 in a given capacitor has a horizontal dimension, horizontal being the plane of the substrate 13, that permits the acceptance of a final conductive layer 15 in the sloped portions 21. That is, assuming the electrode material will be vapor deposited virtually perpendicular to the substrate 13, and that the layers 15 in the sloped portions 21 will be steeper and steeper with respect to the substrate as additional layers are built up, the initial capacitor region-cut-off line spacing must be great enough so that the final electrode layer 15 is not required to be vertical to the substrate. In practice, when working with coatings and layers having the thicknesses indicated, it is desirable to space the terminal portions 18 at least 10 microns from the central capacitance region 17, or else control of the coatings and layers 15, 16 in the sloped portions 21 becomes difficult and the resulting structure build-up unreliable.

It can now be seen that the purpose of the notch 14 is to divide the substrate 13 and thus eliminate electrical connection between the two terminal portions 18.

In carrying out an embodiment of the invention, capacitors like the capacitor 10 are simultaneously formed in large numbers by depositing electrode material and dielectric in strips on the substrate 13 which rapidly moves relative to the depositing systems. The layers 15 and coatings 16 are built up in the number desired by causing successive passes to be made relative to the depositing systems. The result, see Fig. 10, is a series of lanes 25 which can be separated along the cut-off lines 19 running in the machine direction 26, a term that will be made evident below, and divided into individual capacitors 10 along cross cut lines 27 spaced in accordance with the nominal capacitance desired. The greater the spacing, the more electrode area each layer 15 will have in the capacitor region 17 of the individual capacitor 10 and the higher will be the resulting capacitance.

From the lane configuration, capacitors 10 are thus cut to desired size, the notch 14 is formed, the leads 12 are added, and the device encapsulated.

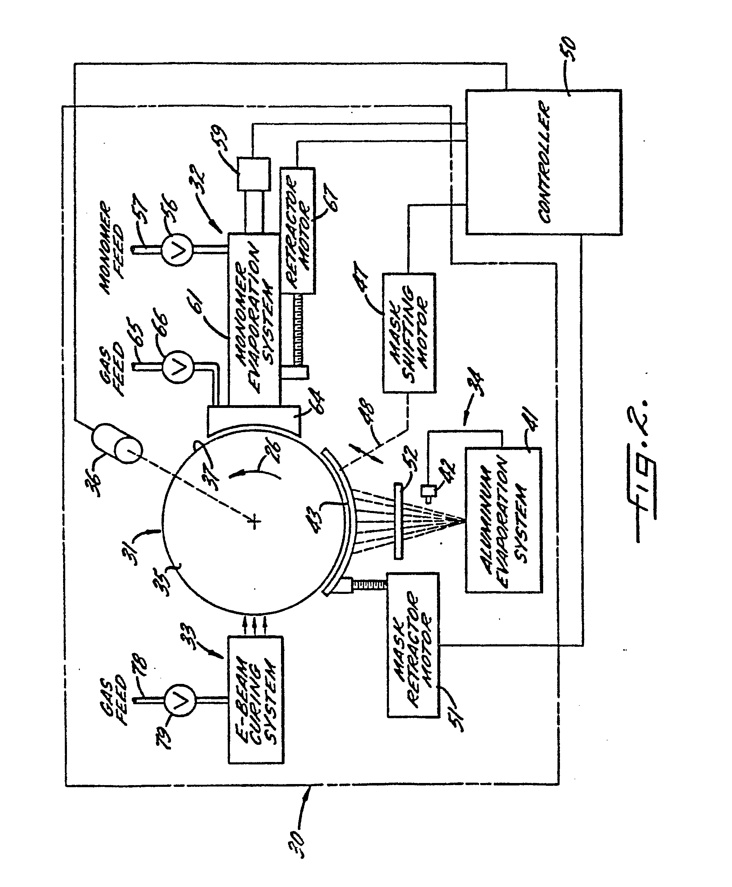

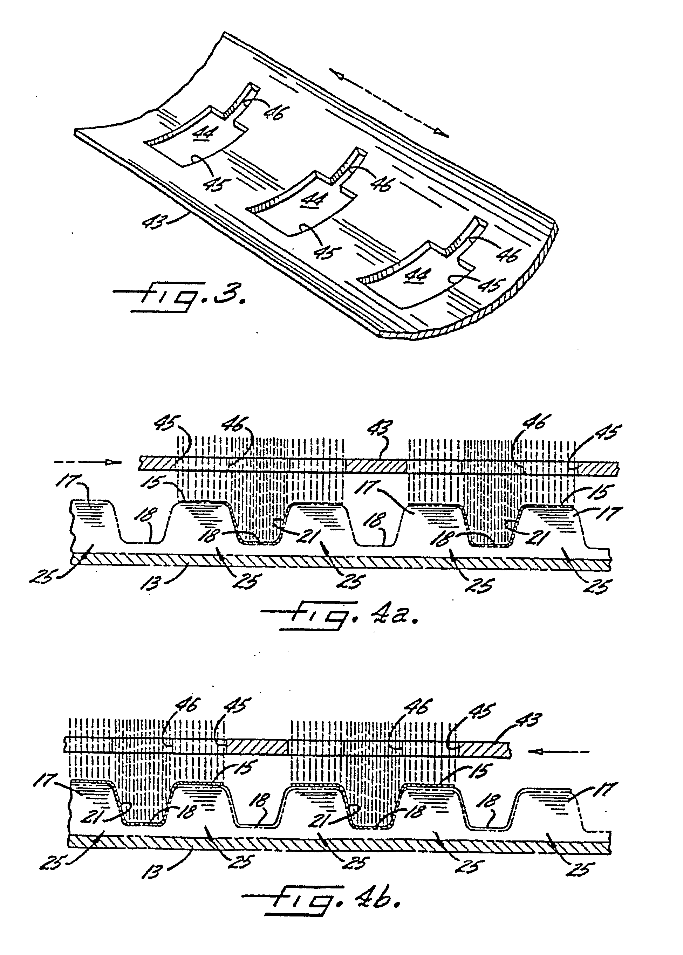

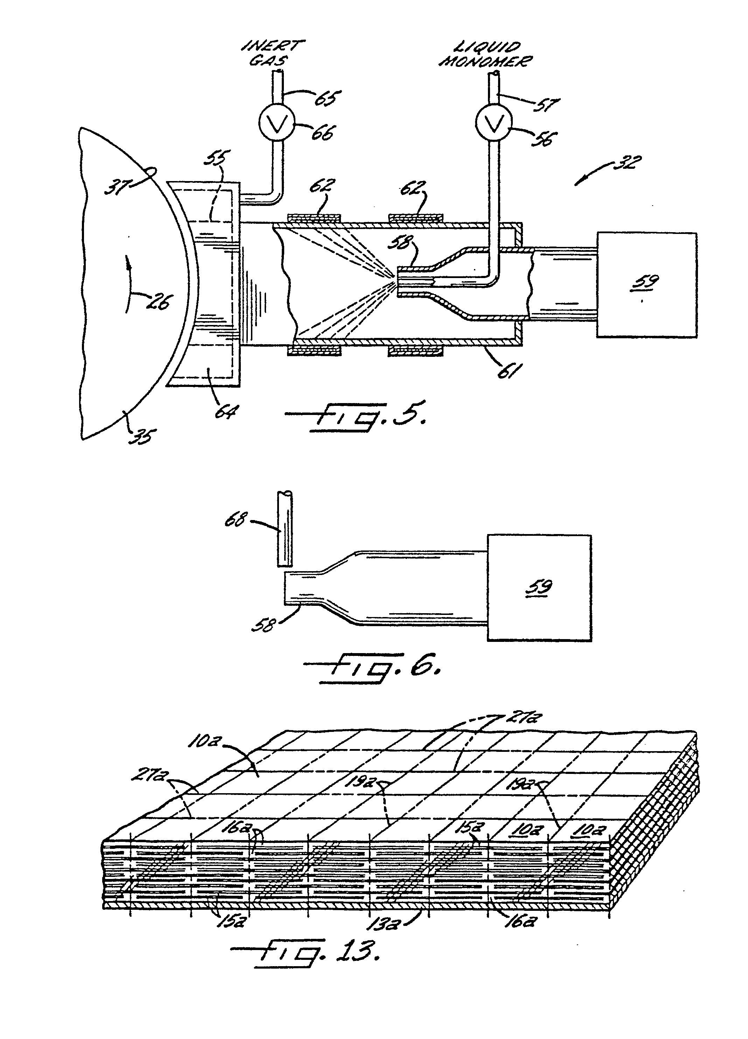

It can be seen from Fig. 1 that the dielectric coatings 16 can be built up by depositing a coating strip at the same relative position of the substrate 13 after each strip of electrode material has been deposited. To create the interleaved sets of electrode layers 15, in one depositing pass electrode material is deposited in every other terminal portion 18 and the adjacent capacitor regions 17, and in the next pass, after an intervening dielectric coating, electrode material is deposited in the terminal portions 18 not previously receiving material and in each adjacent capacitor region 17 (see Figs. 4A and 4B).

The inventive capacitor concept, in a preferred form, includes apparatus arranged within and around a chamber 30 (see Fig. 2) which is either a vacuum chamber or a housing divided into vacuum portions. Within a vacuum environment is a carrier 31, a dielectric deposit system 32, a monomer curing system 33, and an electrode material deposit system 34. A substantial vacuum is required down to the order of $1 \times 10^{-4}$ Torr.

The carrier 31 is a water cooled drum 35 driven by a motor 36 and whose outer cylindrical surface 37 defines a rapidly moving continuous surface passing through a dielectric forming zone and an electrode forming zone. The regions in which the drum surface 37 and the systems 32, 33 are located constitute the dielectric forming zone, and the region in which the drum surface 37 and the system 34 are located constitute an electrode forming zone. Drum rotation creates the machine direction 26, which is the direction the surface passes through the dielectric forming zone and the electrode forming zone.

Because of the small dimensions involved, the surface 37 should be smooth and true. The sheet of substrate 13 is firmly secured to the drum 35 and, when in place, the outer surface of the substrate defines the surface 37. The drum 35 is cooled to about 70° F. so as to facilitate condensation of the vapor deposits, and the apparatus functions at drum surface speeds of 150 to 600 feet per minute.

The electrode material deposit system 34 includes a conventional electron beam vaporization device 41 such as those used for metallizing film within a vacuum environment. The rate of vaporization is sensed by a conventional quartz monitoring device 42 providing feedback for controlling the rate at which aluminum is vaporized by the device 41.

The pattern in which aluminum vapor is deposited is controlled by a mask, in this case a shadow mask 43, having openings 44 through which the vapor passes. The openings 44 have a main portion 45 wide enough to span the capacitance regions 17 in two adjacent lanes 25 as well as the intermediate terminal portions 18. As the capacitors are built up, the sloped portions 21 become greater in surface area and more aluminum is required to lay down an integral layer capable of carrying current. This is achieved by forming the mask openings 44 with an extension 46 spanning adjacent sloped portions 21 and the intervening terminal portions 18. The amount of electrode material deposited is a function of the time the receiving surface is beneath an open portion of the mask 43, and thus more metal is placed on the sloped portions 21 than in the capacitance regions 17.

The alternate pattern of metal vapor deposition discussed above in connection with Figs. 4a and 4b is obtained by shifting the mask 43 axially of the drum 35 upon each drum revolution. A mask motor 47 makes the shifting movement through a simple mechanical connection 48. A controller 50 is connected to the drum motor 36 for sensing drum revolution, and the controller 50 supplies the appropriate shifting signal to the mask shifting motor 47. It is desirable to keep the mask 43 close to the surface onto which the metal vapor is being deposited, and this closeness is maintained by a mask retraction motor 51 which steps the mask away from the surface 37 upon each drum revolution, as signalled by the controller 50, through a distance approximating the thickness of the electrode layer being deposited.

As it is convenient to energize the device 41 and bring it into stable operating condition before beginning to make capacitors, a removable shutter 52 is interposed between the device 41 and the mask 43 for closing off the passage of vapor until the shutter 52 is withdrawn.

As a feature of the invention, the dielectric deposit system 32 flash vaporizes the dielectric in monomer form, and the smaller gaseous molecules are guided under moderate differential pressure through nozzles 55 onto the capacitor lanes 25. The monomer in liquid form is fed through a line 56 and control valve 57 to the open end of the horn 58 of an ultrasonic atomizer 59. The resulting tiny liquid droplets impinge on the inner walls of a vaporization tube 61 heated by band heaters 62 to an appropriate temperature, approximately 350° C. for the acrylate resins referred to above. The liquid is thus instantaneously vaporized, i.e., flash vaporized, so as to minimize the opportunity for polymerization. The resulting smaller gas molecules tend to follow a straighter path for better control of the deposition.

Pressure in the tube 61, at about 1 Torr, causes a monomer gas stream to flow through the nozzles 55 for deposition and condensation. The nozzles 55 are heated by conduction from the tube 61 to minimize condensation before the gas stream leaves the nozzles.

The deposition is confined, and the tapered edge shape of the coatings 16 obtained, by restricting the monomer gas flow by using guiding deflectors 63 in the nozzles 55, placing the nozzles 55 quite close to the condensing surface of the lanes 25, and providing inert gas edge barrier walls delivered through sets of nozzles 64 on either side of the monomer nozzles 55. Inert gas is supplied to the nozzles 64 through a line 65 and a control valve 66, and the nozzles 64 are fixed relative to the surface 37 with about a 4 mil clearance spacing, sufficient to clear the expected build-up of the terminal portions 18. The monomer gas nozzles 55 are stepped back by a retraction motor 67, signalled by the controller 50, upon each revolution of the drum by an amount approximating the thickness of a coating 16.

The thickness of the coating 16 is dependent upon the time of deposit, i.e., the length of the nozzles 55 relative to the speed of the surface 37, and the rate of monomer flow through the valve 57. By balancing the inert gas flow using the valve 66 aginst the monomer gas flow, the tapered side of the dielectric coating strips can be controlled.

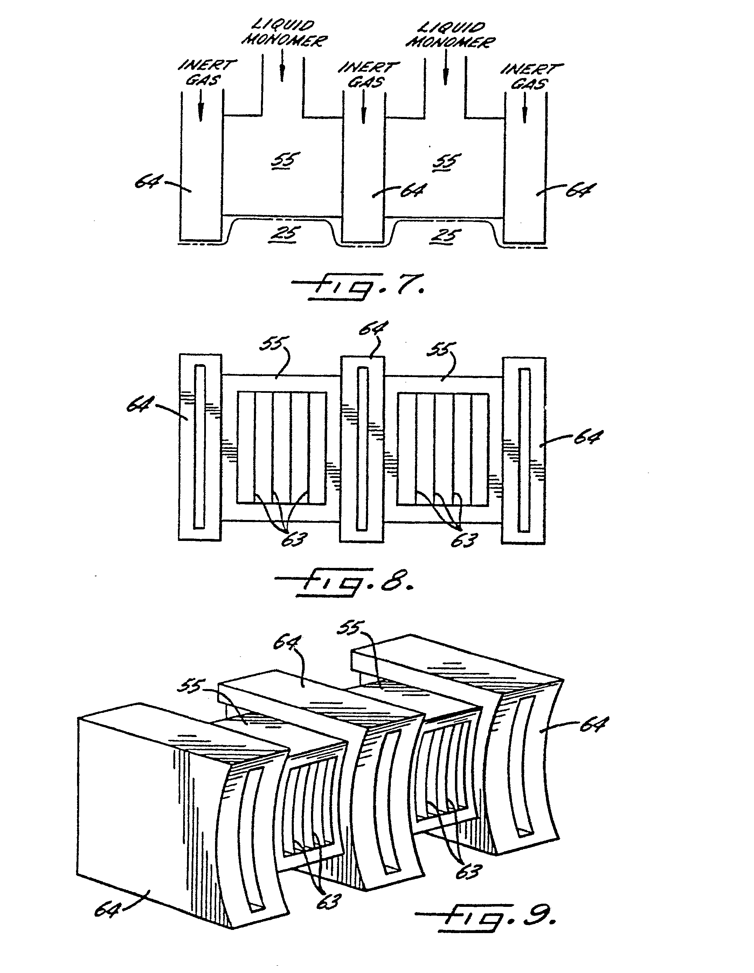

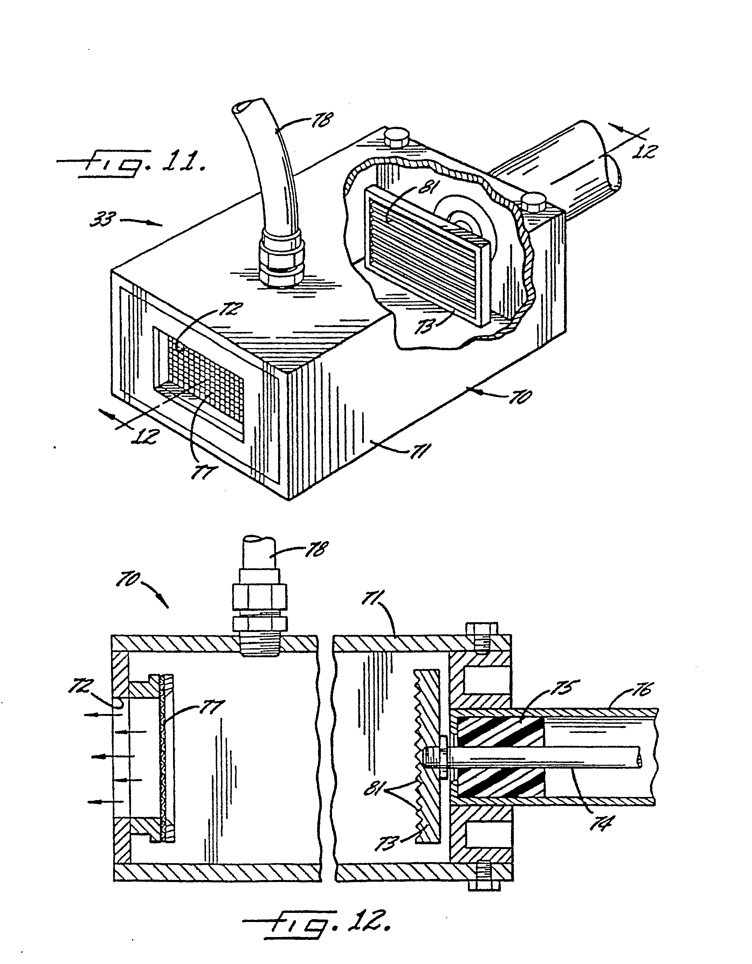

An alternate arrangement for atomizing the liquid monomer is suggested in Fig. 6 wherein the monomer is directed through a capillary tube 68 to a point closely adjacent the horn 58 of the ultrasonic atomizer 59. In this arrangement, a meniscus is formed between the end of the capillary tube 68 and the end of the horn 58, and the monomer is drawn uniformly through the tube.

The condensed liquid monomer is radiation cured by the second system 33 in the dielectric forming zone which includes a radiation source, preferably a gas discharge electron beam gun 70. The gun 70 directs a flow of electrons from a housing chamber 71 through an emitter window 72 onto the monomer, thereby curing the material to a polymerized cross linked form capable of withstanding the high temperatures to which the capacitors 10 might be subject. The cured material is also bonded in place.

The gun 70 includes a rectangular copper cathode 73 supported by a connector 74 in an insulator 75 mounted in a ground shield 76 that is fixed to the housing 71. A tungsten mesh extraction screen 77 is fixed across the window 72. A gas such as argon is fed to the housing chamber 71 through a line 78 and a control valve 79. An electrical potential is imposed between the cathode 73 and its connector 74, and the shield 76, housing 71 and screen 77, with the result, keeping in mind the vacuum environment, that a gaseous plasma is created in the housing, primarily between the cathode 73 and the screen 77. The cathode is preferably formed with grooves 81 on its face so that electrons are expelled in a non-linear beam to substantially fill the housing chamber 71. Because of the plasma created, other electrons are stripped from the ionized gas molecules in different portions of the chamber, a so-called field enhanced effect, with the result that electrons at widely varying energy levels are emitted from the window 72. The wide range of energy levels of the emitted electrons is believed to cause the observed effect that the monomer is cured with little surface charging, and avoiding surface charging on the coatings 16 minimizes the possibility of arcing to the electrode layers. It can also be seen that the gun 70 produces a wide beam of electrons so that a number of capacitor lanes can be simultaneously treated.

The overall operation of the apparatus can now be readily understood. Electrode layers are deposited, coated with dielectric and the dielectric cured, before the surface on which the electrode layers are deposited passes again for successive electrode layers and dielectric coatings. Desired thicknesses of the electrode layers and dielectric coatings are determined by matching the rate of vapor deposition with the surface speed of the drum 35.

It will be apparent that the capacitors 10 are truly miniature capacitors having, nevertheless, useful levels of capacitance. Those familiar with the art will understand that the apparatus and methods disclosed economically produce the capacitors 10 in the sense that high speed production is possible of large numbers of capacitors simultaneously, as well as in the sense that each individual capacitor uses little raw material. Despite the small size of each capacitor, there is, in the design of that capacitor, a usable workable area for securing wire leads so as to complete the assembly. Since the capacitor is made up solely of metal and cured temperature resisting resin, they are capable of withstanding substantial temperatures including those temperatures for a limited time resulting from wave soldering assembly techniques.

As a result of the very small dimensions involved in the thicknesses of the electrode layers and dielectric coatings, the capacitor 10 has the property of being self-healing. That is, should a defect exist in a dielectric coating permitting a small amount of metal to electrically connect electrode layers in the opposite sets, the application of current could be expected to burn or melt the very small cross section of connecting metal so as to open the defect. As a result, it is highly unlikely that the capacitor will fail by shorting out.

The apparatus and methods described above can also be advantageously employed to form capacitors in a full width configuration as opposed to the lane configuration of Fig. 10. As shown in Fig. 13, where elements similar to those already described have been given the corresponding reference numeral with the distinguishing suffix a added, capacitors 10a can be formed on a substrate 13a having both the conductive layers 15a and the dielectric coatings 16a of uniform thickness. Separating individual capacitors 10a along cut-off lines 19a and cross cut lines 27a exposes the edges of the conductive layers 15a and therefore some form of edge termination is required to electrically connect the interleaved layers 15a at the opposite ends of the capacitor.

It will be appreciated that this form of capacitor 10a can be formed by eliminating the inert gas nozzles 64 and uniformly depositing the monomer through the system 32. Because the conductive layers 15a are not sloped, there is also no need for the extension 46 in the shadow mask 43 of the system 34. Otherwise, the capacitors 10a can be made in full width configuration consistent with the width of the systems 32, 33 and 34.

## Claims

1. Apparatus for forming capacitors comprising, a housing (30) having first and second vacuum regions, a carrier (31) in said housing (30) and having a surface movable repetitively through said regions, a conductor depositing device (34) in the first vacuum zone for depositing conductive layers on said surface, a dielectric depositing device (32) in the second vacuum region for depositing coatings of dielectric on said conductive layers, and control means (50) for controlling each of said devices (32,34) so that a conductive layer is deposited, and coated with dielectric, before the surface passes said devices again for receiving successive deposits of said layers and said coatings characterized in that said dielectric depositing means comprises means (61) for flash vapourising a radiation curable dielectric monomer to form a complete monomer coating on successive ones of said conductive layers and by a radiation source (70) located downstream of said dielectric depositing means to cure the monomer coatings produced.

2. Apparatus according to claim 1 charcterized in that said carrier (31) is a drum, in that said conductor depositing device (34) evaporates electrode metal.

3. Apparatus according to claim 1 or to Claim 2 characterized in that said radiation source comprises a gas discharge electron beam gun.

4. Apparatus according to any preceding claims characterized in that said control means (50) acts to control the rates of forming the electrode layers and the dielectric coatings so as to predetermine the thickness of the alternate layers and coatings of electrode and dielectric.

5. Apparatus according to any preceding claims characterized in that the dielectric depositing device (32) includes a first nozzle (55) closely overlying the carrier (31) in the dielectric forming zone and a pair of second nozzles (64) one on each side of said first nozzle (55) for creating an inert gas wall on both sides of the dielectric forming zone.

6. Apparatus according to claim 5 characterized by means (67) for stepping said first nozzle (55) away from said carrier after each repeated pass so as to maintain the first nozzle (55) close but not in contact with said coatings.

7. Apparatus according to any preceding claims characterized in that said conductor depositing device (34) includes means (41) for evaporating metal electrode material and a mask (43) for confining the evaporated metal electrode material to an electrode forming zone.

8. Apparatus according to claim 7 characterized by means (51) for stepping said mask (43) away from said carrier after each pass so as to maintain said mask (43) at substantially the same distance from said coatings.

9. Apparatus according to any preceding claims characterized in that said flash vapourising means (61) includes means for directing and condensing a vapour stream so as to form the coating of the dielectric material within preselected limits on the carrier within a predefined dielectric forming zone.

10. Apparatus according to claim 9 characterized in that said means for directing the vapour stream includes a heated nozzle to avoid having dielectric material stick to the nozzle.

11. A method of producing a capacitor under vacuum on a substrate surface characterized in that said method comprises the steps of (a) forming a layer of electrode material of given thickness on a substrate, (b) flash vapourising a radiation curable dielectric monomer forming a complete dielectric coating of given thickness within preselected limits of thickness on the electrode layer, (c) curing the dielectric coating by irradiation when completed, (d) forming another layer of electrode material of given thickness over the cured dielectric coating, and (e) repeating steps (b), (c) and (d) a selected number of times so as to produce alternate layers and coatings of electrode and cured dielectric materials of predetermined thicknesses on the substrate.

12. A method according to claim 11 characterized in that step (c) is conducted using a radiation source in the form of a gas discharge electron beam gun.

13. A method according to claim 11 or to claim 12 characterized in that the step (b) of forming a coating of dielectric material includes forming the flash vapourised dielectric monomer into a vapour stream and directing and condensing the vapour stream so as to form the coating of the dielectric material within the preselected limits.

14. A method according to any one of claims 11 to 13 characterized in that the layers deposited during every alternate step (a) are offset from the layers deposited during every intervening step (a) so that the offset layers define a central capacitance region of stacked electrically isolated layers, said coating deposition during each step (b) being controlled so as to taper towards zero thickness toward cut-off lines spaced substantially from two separated portions of the central capacitor region, said layer deposition extending beyond said cut-off lines so that successive layers fuse into spaced-apart terminal portions, and said cut-off line spacing being sufficient to cause the uppermost dielectric coating to have a horizontal dimension from the capacitor region to the terminal portion to accept a final layer deposition.

15. A method according to claim 14 characterized in that said layers and said coatings are deposited successively in long strips with the edges of the strips being defined by said terminal portions, and including the step of cutting said strips into discreet capacitors.

16. A method according to claim 15 characterized by the step of connecting wire leads to the opposite terminal portions of the discrete capacitors.

17. A method according to any one of Claims 11 to 13 characterised in that each layer deposited during every alternate step (a) defines an array of spaced discrete electrodes, and each layer deposited during every intervening step (a) defines an array of spaced discrete electrodes offset from but overlapping the discrete electrodes formed during each said alternate step (a) so as to define an array of central capacitance regions, each central capacitance region comprising a stack of electrically isolated discrete electrode portions from which electrodes produced during said alternate steps project from a first side and not a second side and from which electrodes produced during said intervening steps project from the second side and not on the first side, and by the step of severing the resulting layered structure along lines lying intermediate adjacent central capacitance regions.

18. A method according to Claim 16, characterised by the step of electrically connecting all the electrode portions which project from the first side of each separated control capacitance region to a respective first terminal and electrically connecting all the electrode portions which project from the second side of the separated central capacitance region to a respective second terminal.

19. A method according to any one of claims 11 to 13 characterized in that the step (b) of forming a coating of dielectric material includes controlling the deposition of the dielectric by the steps of directing vaporized dielectric at a uniform rate to a central region to form a uniform coating dependent on time, defining edge barriers for said vaporized dielectric spaced from said central region so that dielectric is not deposited past said barriers, and restricting vaporized dielectric flow from said central region to said edge barriers so as to form tapered surfaces from said central region to said edges.

20. A method according to claim 19 characterized in that said edge barriers are defined by flowing walls of inert gas, and said step of restricting vaporized dielectric flow includes balancing the flow rates of said vaporized dielectric and said inert gas.

21. A method according to any one of claims 11 to 20 characterized in that during step (a) while a layer of electrode material is being formed on one part of the substrate, a coating of dielectric material is formed on a second part of the substrate and during step (b) while a coating of dielectric material is being formed on said one part of the substrate a layer of electrode material is formed on said second part of the substrate.

22. A capacitor comprising a plurality of conductive layers (15) with each layer being laterally offset in alternating directions relative to the preceding layer so as to define a central capacitance region, wherein a polymer dielectric layer (16) is on each of the conductive layers so that, in the central capacitance region, the conductive layers are spaced and separated from each other by the polymer layers, characterised in that the polymer layers taper to zero thickness toward lines spaced substantially from two separated portions of the central capacitance region, the conductive layers extend beyond the lines with successive conductive layers electrically contacting one another at spaced-apart terminal portions and the polymer dielectric layers are formed (a) by condensing a vaporized radiation-curable monomer onto such a conductive layer to form a liquid monomer coating on the layer, and (b) by thereafter subjecting the monomer coating to a radiation source to cure the monomer.

23. A capacitor according to claim 22 characterized in that said dielectric coating is of substantially uniform thickness in the central capacitance region.

24. A capacitor according to claim 22 or to claim 23 in which said central capacitance region is spaced from each of said terminal portions by more than 10 microns.

**Revendications**

1. Appareil pour la formation de condensateurs, comprenant une enceinte (30) ayant une première et une seconde régions en dépression, un transporteur (31) à l'intérieur de cette enceinte (30) et ayant une surface mobile répétitivement entre ces régions, un dispositif (34) de dépôt de conducteurs dans la première zone en dépression pour déposer des couches conductrices sur ladite surface, un dispositif (32) de dépôt de diélectrique dans la seconde région en dépression pour déposer des revêtements de diélectrique sur lesdites couches conductrices, et un moyen (50) de commande pour commander chacun des dispositifs (32, 34) de façon qu'une couche conductrice soit déposée et revêtue du diélectrique, avant que la surface passe à nouveau devant lesdits dispositifs pour recevoir des dépôts successifs desdites couches et desdits revêtements, caractérisé en ce que le moyen pour déposer le diélectrique comprend un moyen (61) pour vaporiser par détente un monomère diélectrique durcissable par une radiation pour former un revêtement complet de monomère sur des couches successives desdites couches conductrices et par une source (70) de radiation située en aval du moyen de dépôt du diélectrique afin de durcir les revêtements de monomère produits.

2. Appareil selon la revendication 1 caractérisé en ce que le transporteur (31) est un tambour, en ce que le dispositif (34) de dépôt de conducteur fait évaporer un métal servant d'armature.

3. Appareil selon la revendication 1 ou la revendication 2 caractérisé en ce que la source de radiation comprend un canon à faisceau électronique à décharge dans un gaz.

4. Appareil selon l'une des revendications précédentes caractérisé en ce que le moyen (50) de commande agit pour commander la vitesse de formation des couches servant d'armature et des couches servant de diélectrique de manière à prédéterminer l'épaisseur des couches et des revêtements alternés d'armature et de diélectrique.

5. Appareil selon l'une quelconque des revendications précédentes caractérisé en ce que le dispositif (32) de dépôt du diélectrique comprend une première buse (55) couvrant de près le transporteur (31) dans la zone de formation du diélectrique et une paire de seconde buses (64), une de chaque côté de la première buse (55), pour la création d'une paroi de gaz inerte sur les deux côtés de la zone de formation du diélectrique.

6. Appareil selon la revendication 5 caractérisé par un moyen (67) pour déplacer pas à pas la première buse (55) en l'éloignant du transporteur après chaque passage répété afin de maintenir la première buse (55) à faible distance des revêtements mais sans contact avec eux.

7. Appareil selon l'une quelconque des revendications précédentes caractérisé en ce que le dispositif (34) de dépôt de conducteur comprend un moyen (41) pour faire évaporer une matière métallique servant d'armature et un masque (43) pour confiner la matière métallique évaporée servant d'armature à une zone de formation d'armature.

8. Appareil selon la revendication 7 caractérisé par un moyen (51) pour déplacer pas à pas le masque (43) en l'éloignant du transporteur après chaque passage afin de maintenir le masque (43) substantiellement à la même distance des revêtements.

9. Appareil selon l'une quelconque des revendications précédentes caractérisé en ce que le moyen (61) de vaporisation par détente comprend un moyen pour diriger et condenser un courant de vapeur afin de former le revêtement de matière diélectrique dans des limites présélectionnées sur le transporteur à l'intérieur d'une zone prédéfinie de formation de diélectrique.

10. Appareil selon la revendication 9 caractérisé en ce que le moyen pour diriger le courant de vapeur comprend une buse chauffée pour éviter le collage de matière diélectrique à cette buse.

11. Procédé de fabrication d'un condensateur sous vide sur une surface d'un support caractérisé en ce que ce procédé comprend les opérations de (a) former une couche de matière servant d'armature à une épaisseur donnée sur un support, (b) vaporiser par détente un monomère servant de diélectrique durcissable par une radiation formant un revêtement complet diélectrique d'une épaisseur donnée à l'intérieur de limites présélectionnées d'épaisseur sur la couche servant d'armature,(c) faire durcir le revêtement diélectrique par irradiation quand il est terminé, (d) former une autre couche de matière servant d'armature d'une épaisseur donnée sur le revêtement diélectrique durci et (e) répéter les opérations (b) (c) et (d) un nombre sélectionné de fois afin de produire sur le support des couches et des revêtements alternés de matière servant d'électrode et de matière diélectrique durcie à épaisseurs prédéterminées.

12. Procédé selon la revendication 11 caractérisé en ce que l'opération (c) est conduite à l'aide d'une source de radiation sous forme d'un canon à faisceau électronique à décharge dans un gaz.

13. Procédé selon la revendication 11 et la revendication 12 caractérisé en ce que l'opération (b) de formation de revêtement de matière diélectrique comprend la formation d'un monomère diélectrique vaporisé par détente en un courant de vapeur et la conduite et la condensation du courant de vapeur de façon à former le revêtement de matière diélectrique à l'intérieur des limites présélectionnées.

14. Procédé selon l'une quelconque des revendications 11 à 13 caractérisé en ce que les couches déposées à chaque opération alternée (a) sur deux sont déportées par rapport aux couches déposées pendant chaque opération intermédiaire (a) si bien que les couches déportées définissent une région centrale du condensateur de couches empilées isolées électriquement, le dépôt de revêtement pendant chaque opération (b) étant contrôlé de manière à diminuer d'épaisseur vers une épaisseur nulle en direction de lignes de coupe espacées substantiellement des deux parties séparées de la région centrale du condensateur, ce dépôt de couche s'étendant au-delà des lignes de coupe afin que des couches successives se fondent en parties terminales espacées et cet espacement des lignes étant suffisant pour faire que le revêtement diélectrique le plus supérieur a une dimension horizontale de la région du condensateur jusqu'à la partie terminale pour accepter un dépôt d'une couche finale.

15. Procédé selon la revendication 14 caractérisé en ce que les couches et les revêtements sont déposés successivement en longues bandes avec les bords des bandes étant définis par lesdites parties terminales, et comprenant l'opération de coupe desdites bandes en condensateurs discrets.

16. Procédé selon la revendication 15 caractérisé par l'opération de raccordement de fils conducteurs aux parties terminales opposées des condensateurs discrets

17. Procédé selon l'une quelconque des revendications 11 à 13 caractérisé en ce que chaque couche déposée pendant chaque opération alternée (a) sur deux définit une rangée d'électrodes discrètes espacées, et chaque couche déposée pendant chaque opération intermédiaire (a) définit une rangée d'électrodes discrètes espacées déportées par rapport aux électrodes discrètes formées pendant chaque opération alternée (a), mais les couvrant de manière à définir une rangée de régions centrales de condensateur , chaque région centrale de condensateur comprenant un empilement de parties d'électrodes discrètes isolées électriquement à partir duquel les électrodes produites pendant lesdites opérations alternées se projettent sur un premier côté et non sur un second côté et à partir duquel les électrodes produites pendant les opérations intermédiaires se projettent sur le second côté et non sur le premier côté,et par l'opération de couper la structure résultante à couches superposées le long de lignes intermédiaires entre les régions centrales voisines du condensateur.

18. Procédé selon la revendication 16 caractérisé par l'opération de raccorder électriquement toutes les parties d'électrodes qui se projettent sur le premier côté de chaque région centrale distincte de condensateur à une première borne correspondante et de raccorder électriquement toutes les parties d'électrodes qui se projettent sur le second côté de la région centrale distincte de condensateur à une seconde borne correspondante.

19. Procédé selon l'une quelconque des revendications 11 à 13 caractérisé en ce que l'opération (b) de formation de revêtement de matière diélectrique comprend le contrôle du dépôt du diélectrique par les opérations de conduire du diélectrique vaporisé à un débit uniforme jusqu'à une région centrale pour former un revêtement uniforme dépendant du temps, de définir des barrières de bordure pour ce diélectrique vaporisé espacées de la région centrale pour que le diélectrique ne se dépose pas au-delà desdites barrières et restreindre le courant de diélectrique vaporisé à partir de cette région centrale jusqu'aux barrières de bordure de manière à former les surfaces inclinées de ladite région centrale jusqu'aux bordures.

20. Procédé selon la revendication 19 caractérisé en ce que les barrières de bordures sont définies par des parois circulantes de gaz inerte, et l'opération de restriction du courant diélectrique vaporisé comprend l'équilibrage des débits du diélectrique vaporisé et du gaz inerte.

21. Procédé selon l'une quelconque des revendications 11 à 20 caractérisé en ce qu'au cours de l'opération (a) pendant qu'une couche de matière servant d'armature est en cours de formation sur une partie du support, un revêtement de matière diélectrique est formé sur une seconde partie du support et au cours de l'opération (b) pendant qu'un revêtement de matière diélectrique est en cours de formation sur ladite partie du support,une couche de matière servant d'armature est en formation sur la seconde partie du support.

22. Condensateur comprenant une pluralité de couches conductrices (15), chaque couche étant déportée latéralement dans des sens alternés par rapport à la couche précédente, de manière à définir une région centrale de condensateur , dans lequel une couche (16) de polymère diélectrique se trouve sur chacune des couches conductrices, de sorte que dans la région centrale de condensateur les couches conductrices sont espacées et séparées les unes des autres par les couches de polymère, caractérisé en ce que les couches de polymère diminuent d'épaisseur jusqu'à une épaisseur nulle en direction de lignes espacées substantiellement par rapport aux deux parties séparées de la région centrale de condensateur, les couches conductrices s'étendent au-delà des lignes avec les couches conductrices successives venant électriquement en contact les unes avec les autres aux parties terminales espacées et les couches de polymère diélectrique sont formées (a) par condensation sur une couche conductrice d'un monomère vaporisé durcissable par une radiation pour la formation d'un revêtement de monomère liquide sur la couche, et (b) par l'exposition ensuite du revêtement du monomère à une source de radiation pour le durcissement de ce monomère;

23. Condensateur selon la revendication 22, caractérisé en ce que le revêtement diélectrique est d'une épaisseur substantiellement uni forme dans la région centrale de condensateur.

24. Condensateur selon la revendication 22, ou la revendication 23, dans lequel la région centrale de condensateur est espacée de chacune des parties terminales par plus de 10 microns.

**Ansprüche**

1. Vorrichtung zum Herstellen von Kondensatoren mit einem Gehäuse (30), das einen ersten und einen zweiten Vakuumbereich aufweist, mit einem Träger (31) in diesem Gehäuse (30), der eine wiederholbar durch diese Bereiche bewegbare Oberfläche aufweist, mit einem einen Leiter ablagernden Einrichtung (34) in dem ersten Vakuumbereich zur Ablagerung von leitfähigen Schichten auf der besagten Oberfläche, mit einer ein Dielektrikum ablagernden Einrichtung (32) in dem zweiten Vakuumbereich zum Ablagern von dielektrischen Beschichtungen auf den besagten leitfähigen Schichten, und mit Kontrollmitteln (50) zur Kontrolle jeder der besagten Einrichtungen (32, 34), so daß eine leitfähige Schicht ablagerbar und mit einem Dielektrikum beschichtbar ist, bevor die Oberfläche wieder über die besagten Einrichtungen bewegt wird, um nacheinander Ablagerungen der besagten Schichten und Beschichtungen zu empfangen, **dadurch gekennzeichnet, daß** die besagten das Dielektrikum ablagernden Mittel Mittel (61) zum Blitzverdampfen eines strahlungsbehandelbaren dielektrischen Monomers umfassen, um eine komplette Monomerbeschichtung auf aufeinanderfolgenden der besagten leitfähigen Schichten zu bilden, und durch eine in Bewegungsrichtung hinter dem das Dielektrikum ablagernden Mittel angeordnete Strahlungsquelle (70), um die hergestellten Monomerschichten zu behandeln.

2. Vorrichtung nach Anspruch 1, dadurch gekennzeichnet, daß der besagte Träger (31) eine Trommel ist und daß die den Leiter ablagernde Einrichtung (34) Elektrodenmetall verdampft.

3. Vorrichtung nach Anspruch 1 oder 2, dadurch gekennzeichnet, daß die Strahlungsquelle eine Gasentladungs-Elektronenstrahlkanone umfaßt.

4. Vorrichtung nach einem der vorstehenden Ansprüche, dadurch gekennzeichnet, daß die Kontrollmittel (50) bewirken, daß die Bildungsraten der Elektrodenschichten und der dielektrischen Beschichtungen kontrolliert werden, um die Dicke der alternierenden Schichten und Beschichtungen der Elektroden und des Dielektrikums vorherzubestimmen.

5. Vorrichtung nach einem der vorstehenden Ansprüche, dadurch gekennzeichnet, daß die das Dielektrikum ablagernde Einrichtung (32) eine erste Düse (55), die nahe über dem Träger (31) in dem das Dielektrikum ausbildenden Bereich angeordnet ist, und ein Paar von zweiten Düsen (64) umfaßt, wobei eine auf jeder Seite der besagten ersten Düse (55) angeordnet ist, um eine Inertgaswand auf beiden Seiten des Dielektrikum bildenden Bereichs zu erzeugen.

6. Vorrichtung nach Anspruch 5, gekennzeichnet durch Mittel (67) zur stufenschrittweisen Bewegung der ersten Düse (55) von dem Träger weg nach jedem wiederholtem überstreichen, um die erste Düse (55) nahe aber nicht in Kontakt mit den Beschichtungen zu halten.

7. Vorrichtung nach einem der vorstehenden Ansprüche, dadurch gekennzeichnet, daß die den Leiter ablagernde Einrichtung (34) Mittel (41) zum Verdampfen von Metallelektrodenmaterial und eine Maske (43) zum Eingrenzen des verdampften Metallelektrodenmaterials in einem elektrodenbildenen Bereich umfassen.

8. Vorrichtung nach Anspruch 7, gekennzeichnet durch Mittel (51) zur stufenschrittweisen Bewegen der Maske (43) von dem Träger weg nach jedem überstreichen, um die Maske (43) in im wesentlichen gleichen Abstand von den besagten Beschichtungen zu halten.

9. Vorrichtung nach einem der vorstehenden Ansprüche, dadurch gekennzeichnet, daß die Blitzverdampfungsmittel (61) Mittel zum Ausrichten und Konzentrieren eines Dampfstrahls umfassen, um die Beschichtung des dielektrischen Materials innerhalb vorbestimmter Grenzen auf dem Träger innerhalb eines vorbestimmten Dielektrikum-bildenden Bereichs zu bilden.

10. Vorrichtung nach Anspruch 9, dadurch gekennzeichnet, daß die besagten Mittel zum Ausrichten des Dampfstrahls eine geheizte Düse umfassen, um zu vermeiden, daß dielektrisches Material an der Düse anhaftet.

11. Verfahren zur Herstellung eines Kondensators im Vakuum auf einer Substratoberfläche, **gekennzeichnet durch** die Verfahrensschritte (a) des Bildens einer Schicht von Elektrodenmaterial einer vorgegebenen Dicke auf einem Substrat, (b) des Blitzverdampfens eines strahlungsbehandelbaren dielektrischen Monomers, das eine vollständige dielektrische Beschichtung vorgegebener Dicke innerhalb vorbestimmter Grenzen der Dicke auf der Elektrodenschicht bildet, (c) des Behandelns der dielektrischen Beschichtung durch Bestrahlung bei ihrer Fertigstellung, (d) des Bildens einer weiteren Schicht von Elektrodenmaterial einer vorgegebenen Dicke auf der behandelten dielektrischen Beschichtung, und (e) des Wiederholens der Verfahrensschritte (b), (c) und (d) in einer vorbestimmten Anzahl, um so alternierende Schichten und Beschichtungen von Elektroden und behandelten Dielektrikum-Materialien von vorbestimmten Dicken auf dem Substrat herzustellen.

12. Verfahren nach Anspruch 11, dadurch gekennzeichnet, daß der Verfahrensschritt (c) mit einer Strahlungsquelle in der Gestalt einer Gasentladungs-Elektronenstrahlkanone durchgeführt wird.

13. Verfahren nach Anspruch 11 oder 12, dadurch gekennzeichnet, daß der Verfahrensschritt (b) des Bildens einer Beschichtung aus dielektrischen Material das Ausbilden des blitzverdampften dielektrischen Monomers in einen Dampfstrahl und das Ausrichten und Konzentrieren des Dampfstrahls umfaßt, um die Beschichtung aus dielektrischem Material innerhalb vorbestimmter Grenzen zu bilden.

14. Verfahren nach einem der Ansprüche 11 bis 13, dadurch gekennzeichnet, daß die während jedes alternierenden Verfahrenschrittes (a) abgelagerten Schichten von den während jedes Zwischenschrittes (a) abgelagerten Schichten seitlich versetzt sind, so daß die seitlich versetzten Schichten einen zentralen kapazitiven Bereich von übereinanderliegenden elektrisch voneinander isolierten Schichten begrenzen, daß die Beschichtungsablagerung während jedes Schrittes (b) derart kontrolliert wird, daß sie sich zu einer Dicke Null zu Abtrennlinien hin verdünnt, die in zwei wesentlich voneinander getrennten Abschnitten von dem zentralen kapazitiven Bereich getrennt sind, daß die besagten Schichtenablagerungen sich über die besagten Abtrennlinien hinauserstrecken, so daß aufeinanderfolgende Schichten in räumlich voneinander getrennten Endabschnitten zusammenfließen, und daß der Abtrennlinienabstand ausreicht, um zu bewirken, daß die oberste dielektrische Beschichtung eine horizontale Ausdehnung von dem kapazitiven Bereich zu dem Anschlußabschnitt hin aufweist, um eine abschließende Schichtablagerung aufzunehmen.

15. Verfahren nach Anspruch 14, dadurch gekennzeichnet, daß die besagten Schichten und Beschichtungen aufeinanderfolgend in langen Streifen abgelagert werden, wobei die Kanten der Streifen durch die besagten Anschlußabschnitte begrenzt werden, und durch den Verfahrensschritt des Schneidens der Streifen in einzelne Kondensatoren.

16. Verfahren nach Anspruch 15, gekennzeichnet durch den Verfahrensschritt des Verbindens von Drahtanschlüssen mit den gegenüberliegenden Endabschnitten der einzelnen Kondensatoren.

17. Verfahren nach einem der Ansprüche 11 bis 13, dadurch gekennzeichnet, daß jede der während jedes alternierenden Schrittes abgelagerten Schichten (a) eine Matrix von räumlich voneinander getrennten Elektroden definiert, und daß jede der während jedes Zwischenschrittes (a) abgelagerten Schichten eine Matrix von räumlich voneinander getrennten einzelnen Elektroden definiert, die in seitlich versetzter aber übereinanderliegender Weise über den einzelnen während jedes alternierenden Schrittes (a) gebildeten Elektroden angeordnet sind, so daß eine Matrix von zentralen kapazitiven Bereichen definiert wird, wobei jeder zentrale kapazitive Bereich einen Stapel von elektrisch isolierten einzelnen Elektrodenabschnitten umfaßt, aus denen während jedes alternierenden Schrittes Elektroden, die auf einer Seite aber nicht auf der anderen Seite herausragen, und während jedes Zwischenschrittes Elektroden erzeugt werden, die auf der zweiten Seite aber nicht auf der ersten Seite herausragen, und durch den Verfahrensschritt des Durchtrennens der erhaltenen geschichteten Struktur entlang von Linien, die zwischen benachbarten zentralen kapazitiven Bereichen liegen.

18. Verfahren nach Anspruch 16, gekennzeichnet durch den Verfahrensschritt des elektrischen Verbindens von allen Elektrodenabschnitten, die aus der ersten Seite von jedem getrennten Kontrollkapazitätsbereich herausragen, mit einem jeweils ersten Anschlußpunkt und des elektrischen Verbindens von allen Elektrodenabschnitten, die aus der zweiten Seite von jedem getrennten zentralen kapazitiven Bereich herausragen, mit einem jeweils zweiten Anschlußpunkt.

19. Verfahren nach einem der Ansprüche 11 bis 13, dadurch gekennzeichnet, daß der Verfahrensschritt (b) des Bildens einer Beschichtung von dielektrischem Material das Kontrollieren der Ablagerung des Dielektrikums durch die Verfahrensschritte umfaßt, des Richtens eines verdampften Dielektrikums in einer gleichmäßigen Rate auf einen zentralen Bereich hin, um eine gleichmäßige zeitabhängige Beschichtung zu bilden, des Festlegens von Kantengrenzen für das verdampfte Dielektrikum in einem Abstand von dem besagten zentralen Bereich, so daß das Dielektrikum nicht hinter diesen Grenzen abgelagert wird, und des Begrenzens des Flusses des verdampften Dielektrikums von dem besagten zentralen Bereich zu den besagten Kantengrenzen, um sich verjüngende Oberflächen von dem zentralen Bereich zu den Kanten hin zu schaffen.

20. Verfahren nach Anspruch 19, dadurch gekennzeichnet, daß die Kantengrenzen durch fließende Wände aus Inertgas definiert sind, und daß der Verfahrensschritt des Begrenzens des Flusses des verdampften Dielektrikums das Ausgleichen der Durchflußraten des verdampften Dielektrikums und des besagten Inertgases umfaßt.

21. Verfahren nach einem der Ansprüche 11 bis 20, dadurch gekennzeichnet, daß während des Schrittes (a), während eine Schicht von Elektrodenmaterial auf einem Abschnitt des Substrates gebildet wird, eine Beschichtung aus dielektrischem Material auf einem zweiten Abschnitt des Substrates gebildet wird, und daß während des Schrittes (b), während eine Beschichtung von dielektrischem Material auf dem besagten einen Abschnitt des Substrates gebildet wird, eine Schicht von Elektrodenmaterial auf dem besagten zweiten Abschnitt des Substrates gebildet wird.

22. Kondensator, der eine Vielzahl von leitfähigen Schichten (15) umfaßt, wobei jede Schicht in alternierenden Richtungen seitlich in Bezug zur vorhergehenden Schicht versetzt ist, um einen zentralen kapazitiven Bereich zu begrenzen, in dem sich eine polymere dielektrische Schicht (16) auf jeder der leitfähigen Schichten befindet, so daß in dem zentralen kapazitiven Bereich die leitfähigen Schichten räumlich voneinander durch die Polymerschichten getrennt sind, **dadurch gekennzeichnet,** daß die Polymerschichten sich zu einer Dicke Null zu Linien hin verdünnen, die räumlich im wesentlichen von zwei getrennten Abschnitten des zentralen kapazitiven Bereichs getrennt sind, wobei die leitfähigen Schichten sich über die Linien mit aufeinanderfolgenden leitfähigen Schichten erstrecken, die miteinander an räumlich voneinander getrennten Anschlußabschnitten in elektrischem Kontakt stehen, und daß die polymeren dielektrischen Schichten gebildet werden, indem (a) ein verdampftes strahlungsbehandelbares Monomer auf eine solche leitfähige Schicht gerichtet wird, um eine flüssige Monomerbeschichtung auf der Schicht zu bilden, und indem (b) danach die Monomerbeschichtung einer Strahlungsquelle ausgesetzt wird, um das Monomer zu behandeln.

23. Kondensator nach Anspruch 22, dadurch gekennzeichnet, daß die dielektrische Beschichtung in dem zentralen kapazitiven Bereich von im wesentlichen gleichförmiger Dicke ist.

24. Kondensator nach Anspruch 22 oder 23, dadurch gekennzeichnet, daß der zentrale kapazitive Bereich von jeder der Anschlußabschnitte durch mehr als 10 Mikrometer getrennt ist.

Fig. 1.

Fig. 1a.

Fig. 10.

GAS FEED

MONOMER FEED

MONOMER EVAPORATION SYSTEM

RETRACTOR MOTOR

MASK SHIFTING MOTOR

ALUMINUM EVAPORATION SYSTEM

MASK RETRACTOR MOTOR

E-BEAM CURING SYSTEM

GAS FEED

CONTROLLER

Fig. 2.

_Fig. 3._

_Fig. 4a._

_Fig. 4b._

INERT GAS

LIQUID MONOMER

FIg.5.

FIg.6.

FIg.13.

_fig.7._

_fig.8._

_fig.9._

18

Fig. 11.

Fig. 12.